# DEMANDE DE BREVET EUROPEEN

(11) **EP 2 695 524 A1**
(43) Date de publication de la demande: **12.02.2014**
(21) Numéro de dépôt: 12179660.1
(22) Date de dépôt: 08.08.2012
(51) Int. Cl.: A23L 1/05, A23L 1/0532, A23L 1/29, A23L 1/305, A23L 1/00, A23L 1/325, A23P 1/10

(54) **Procédé de fabrication de plats en texture modifiées**

(71) Demandeur: Darricau, Jean-Christophe, 1131 Tolochenaz (CH)
(72) Inventeur: Darricau, Jean-Christophe, 1131 Tolochenaz (CH)
(74) Mandataire: Ganguillet, Cyril

(57) **Abrégé**

Procédé de fabrication d'une préparation alimentaire à texture modifiée comprenant les étapes suivantes : réduction d'un aliment solide en aliment mou, addition à l'aliment mou d'un additif X1 qui est un additif gélifiant thermoréversible, addition à l'aliment mou d'un additif X2 qui est un additif protéique comprenant de l'albumine, et moulage de l'aliment mou dans un moule à une température entre 38°C et 59°C.

## Description

### Domaine technique

La présente invention concerne un procédé de transformation d'aliments pour l'obtention de préparations ou produits alimentaires à texture modifiée, en particulier un procédé de transformation d'aliments à partir d'aliment naturel pour l'obtention de préparations ou produits alimentaires à texture modifiée et moulés, ainsi que ladite préparation ou ledit produit alimentaire obtenu, plus particulièrement destinés à des personnes souffrant de dysphagie, de troubles de la mastication. La présente invention concerne plus particulièrement un procédé de transformation d'aliments pour l'obtention de préparations ou produits alimentaires à texture modifiée reprenant leurs aspects organoleptiques et visuels.

### Contexte de l'invention

La dysphagie est l'incapacité à avaler ou la difficulté à avaler et peut être causée par des maladies neurologiques, des infections, des maladies métaboliques ou des interventions médicales. La dysphagie est souvent liée à des troubles de la mastication qui sont souvent une conséquence de maladies neurologiques, d'infections, d'infections dentaires, de troubles de dentition, de maladies métaboliques ou d'interventions médicales.

Sont compris dans les maladies neurologiques : les accidents vasculaires cérébraux, la maladie de Parkinson, la maladie d'Alzheimer, la sclérose latérale amyotrophique, les tumeurs cérébrales, la démence. D'autres affections comme les infections buccales, les caries dentaires, ou la perte totale ou partielle de la dentition, l'ostéoporose, l'arthrose de l'articulation temporo-mandibulaire, parodontopathies, ostéopathie des maxillaires, le port de prothèse dentaire ou d'appareil dentaire ou orthodontique peuvent avoir une incidence sur la qualité de la mastication. Toutes ces affections, maladies induisent une fatigue musculaire ou des troubles moteurs rendant la mastication difficile. La durée des repas s'en trouvent augmente, deviennent fatiguant, longs, fastidieux provoquant un écoeurement chez la personne s'alimentant et sont ressentis par les personnes souffrantes de dysphagie et/ou de troubles masticatoires comme un véritable effort. Ainsi les personnes souffrantes vont diminuer les quantités d'aliments ingérés ce qui entraine dénutrition, carences nutritionnelles et pertes de forces physiques, voir mortalité. De plus les aliments mal mastiqués peuvent provoquer suffocations et une mauvaise assimilation des nutriments par le système digestif.

Il est souhaitable de transformer ou de modifier la texture des aliments solides pour faciliter la formation du bol alimentaire, de sa déglutition et de l'assimilation des nutriments, en particulier des aliments destinés aux personnes dysphagiques ou souffrants de problèmes masticatoires. Ainsi les aliments solides sont transformés en aliments mous soit des purées, des hachés ou des mixés. La texture désirée est généralement obtenue avec un mélangeur, un robot culinaire, un mixeur ou par écrasement des aliments directement dans l'assiette. L'ajout de liquide est souvent nécessaire pour produire un aliment en purée lisse et sans grumeau ou sans grosse particule pour éviter toute suffocation.

Cette texture d'aliment mou est la plus demandée dans les établissements d'hébergement pour personnes âgées dépendantes (EHPAD), les établissements médico-sociaux s'occupant de personnes souffrant de dysphagie et de troubles masticatoires. Cependant les produits résultant de cette modification de texture perdent leur appétence et souvent leurs aspects organoleptiques et visuels. Ils ne sont plus attrayants, fades et perdent une partie de leurs valeurs nutritionnelles (vitamines, aromes) renforçant l'inappétence de l'aliment et le problème de la dénutrition chez les personnes souffrant de dysphagie et/ou de problèmes masticatoires. De plus la préparation de ce type d'aliment mou demande une manipulation accrue de l'aliment, ce qui augmente les risques sanitaires, d'hygiène, de contaminations croisées, et de contaminations par des bactéries fécales. Cette préparation d'aliment mou demande du temps, provoque une surcharge de travail pour le personnel de cuisine comme pour le personnel soignant, entraîne des surcoûts et ne permet pas un dressage adéquat des aliments pour leur conserver leur appétence et leurs aspect organoleptiques et visuels, que sont les formes et couleurs, le goût, l'odeur, les arômes, et une texture autre que semi-liquide comme la purée, le mixé ou le haché.

En général, les procédés de préparation d'aliments à texture modifiée connus dans le domaine de l'industrie alimentaire comprennent un moulage final de l'aliment reconstitué pour lui redonner un aspect tridimensionnel et une apparence et une texture naturelle imitant le produit d'origine. Souvent, les éléments de base de ces préparations sont des éléments de synthèse ou chimiques qui, mis ensemble, forment un mélange reconstitué de composition chimique, gustative et de couleurs proche de l'aliment d'origine. Une structure et une texture proche de l'aliment d'origine est redonnée à cette préparation d'aliment reconstitué par un procédé chimique avant le moulage pour obtenir un produit alimentaire imitant l'aliment d'origine comme par exemple la fabrication d'huître artificielle, de viande synthétique reconstituée, de caviar artificiel (FR209057, FR2090571, US6,770,311). D'autres procédés concernent la mise en forme de morceaux d'aliments ou de chairs filetées ou émincées comme par exemple des filets de poisson. Ceux-ci sont conditionnés par reconstitution et pressage des chairs dans un moule afin d'éliminer leur eau et de leur donner une forme imitant l'aliment naturel avant d'être apprêtés pour un certain mode de cuisson (filets panés, beignets etc.) (DE102008033450). La plupart de ces procédés ont pour but de redonner non seulement une forme naturelle ou une apparence naturelle à l'aliment mais aussi de reconstituer la texture de l'aliment d'origine et de la garder. Ainsi, dans le procédé de GB2343358, la texture de la viande en morceau de poulet ou de poisson n'est pas modifiée. La viande de poulet ou de poisson est distribuée à une pression élevée dans un moule qui permet un pressage de pièces de viande relativement grandes et de garder leur structure musculaire naturelle dans le produit alimentaire final.

Les morceaux de viandes ou la pâte de viandes avant moulage peuvent être aussi mélangés à des additifs alimentaires, par exemple, à une solution de fibrinogène/thrombine, de l'amidon, à un liant, à de l'agglomérant pour permettre la cohésion des morceaux ou de la pâte et lui permettre un moulage stable (WO95/163364, US4,692,341). Des additifs tels que colorants sont aussi rajoutés lors du moulage de l'aliment pour lui donner une apparence naturelle.

Cependant tous ces aliments ne s'adressent pas à des personnes ayant des troubles de la mastication ou à des personnes âgées car, pour être ingérés, ces aliments ou préparations doivent être mâchés.

Un des buts de la présente invention est de fournir un procédé pour préparer un produit alimentaire dont la texture de l'aliment de base est modifiée pour être facilement assimilé et consommé par des personnes dysphagiques ou atteintes de troubles masticatoires sans devoir exercer une mastication.

Un autre but de la présente invention est de préserver l'appétence, les qualités et les aspects organoleptiques et visuels de l'aliment de base non-transformé dans la préparation alimentaire comprenant un aliment à texture modifiée et de garder un aspect tridimensionnel ou proche de l'apparence naturelle de l'aliment.

La présente invention a aussi pour but d'économiser du temps au personnel et travailleur concernés (personnel de cuisine, soignant, de garde), temps qui peut être réinvestit dans d'autres fonctions, et de coûts lors de la préparation de repas destinés aux personnes dysphagiques ou ayant des troubles masticatoires, que ce soit en établissement médico-sociaux ou lors de la préparation de repas livrés à domicile et de contribuer à la garde de l'autonomie et de qualité de vie desdites personnes.

Ces objectifs et buts sont avantageusement atteints par le procédé tel que décrit dans l'invention pour obtenir une préparation alimentaire à texture modifiée et la préparation alimentaire comprenant un aliment ou une préparation alimentaire à texture modifiée résultant dudit procédé.

Selon le procédé de l'invention, il n'est pas nécessaire de déterminer une structure de l'aliment à texture modifiée qui est considérée comme facile à avaler, comme décrit dans WO 2005/117617, puisque l'aliment solide de départ ou de base est réduit à l'état d'une purée ou d'un haché ou d'un mixé sans morceau ou sans grumeau requérant une mastication ou provoquant une suffocation. Aucune restructuration ou reconstitution de la texture de l'aliment d'origine n'est redonnée à la préparation finale qui a une consistance ferme par opposition à liquide ou semi-liquide mais qui ne requiert aucune mastication. En effet un des avantages de la préparation alimentaire obtenue par le procédé de l'invention est que la réduction de celle-ci en un bol alimentaire ne requiert qu'une simple pression de la langue sur l'aliment vers le palais pour obtenir une bouillie facilement avalable.

Un autre avantage est que l'addition de colorant ou d'agents conservateurs pour imiter et garder un aspect naturel n'est pas nécessaire. Les températures utilisées dans le procédé de l'invention ainsi que le temps nécessaire pour le réaliser permettent d'obtenir une préparation alimentaire finale à texture modifiée qui garde sa couleur et les aspects visuels de l'aliment de base d'origine. De plus les risques de contaminations lors de la préparation ou de la conservation de ladite préparation sont faibles ou dans les normes définies pour ce type de préparation voir nul.

### Résumé de l'invention

Un objet de la présente invention est un procédé de fabrication d'une préparation alimentaire à texture modifiée comprenant les étapes suivantes : réduction d'un aliment solide en aliment mou , addition à l'aliment mou d'un additif X1 qui est un additif gélifiant thermoréversible, addition à l'aliment mou d'un additif X2 qui est un additif protéique comprenant de l'albumine , et moulage de l'aliment mou dans un moule à une température entre 38°C et 59°C.

Un autre objet de la présente invention est de fournir une préparation alimentaire à texture modifiée obtenue selon le procédé de fabrication de l'invention.

D'autres objets et des modes de réalisation préférés de la présente invention sont décrits en détail dans les revendications dépendantes.

### Brève description des dessins

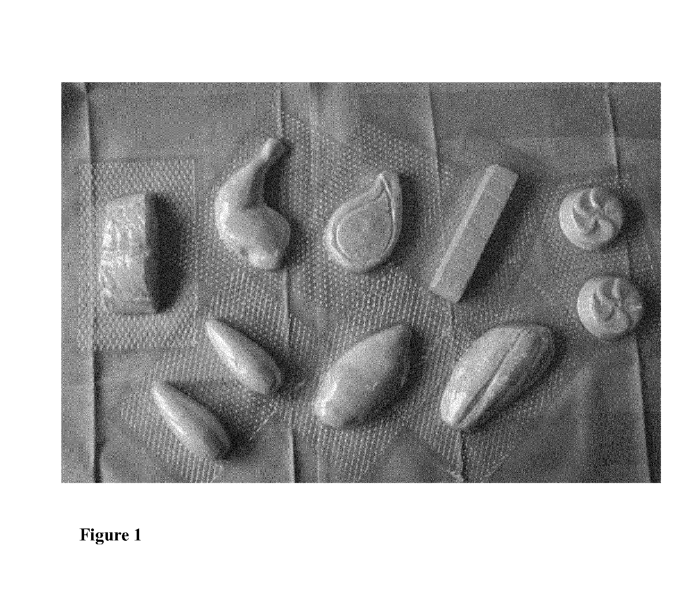

La Figure 1 est une photographie de préparations alimentaires à texture modifiée obtenue par le procédé de l'invention conditionnés dans leurs moules thermoformés qui les recouvrent.

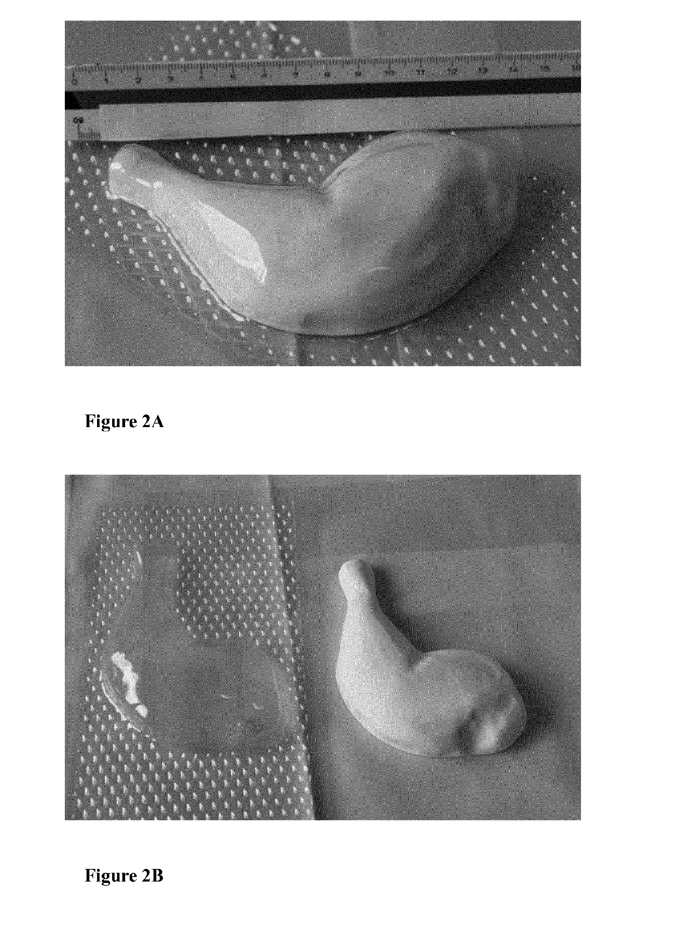

La Figure 2A est une photographie d'une préparation alimentaire à texture modifiée de poulet obtenue par le procédé de l'invention recouvert de son moule thermoformé et donnant la forme de l'aliment solide, une cuisse de poulet. La règle est présente à titre d'indication pour la grandeur de la préparation alimentaire à texture modifiée moulée. La Figure 2B est une photographie de la préparation alimentaire de la Figure 2A à droite du moule thermoformé en forme de cuisse de poulet. Le côté bombé ou en relief du moule correspondant au creux contenant la préparation alimentaire lors du moulage est présenté vers le haut.

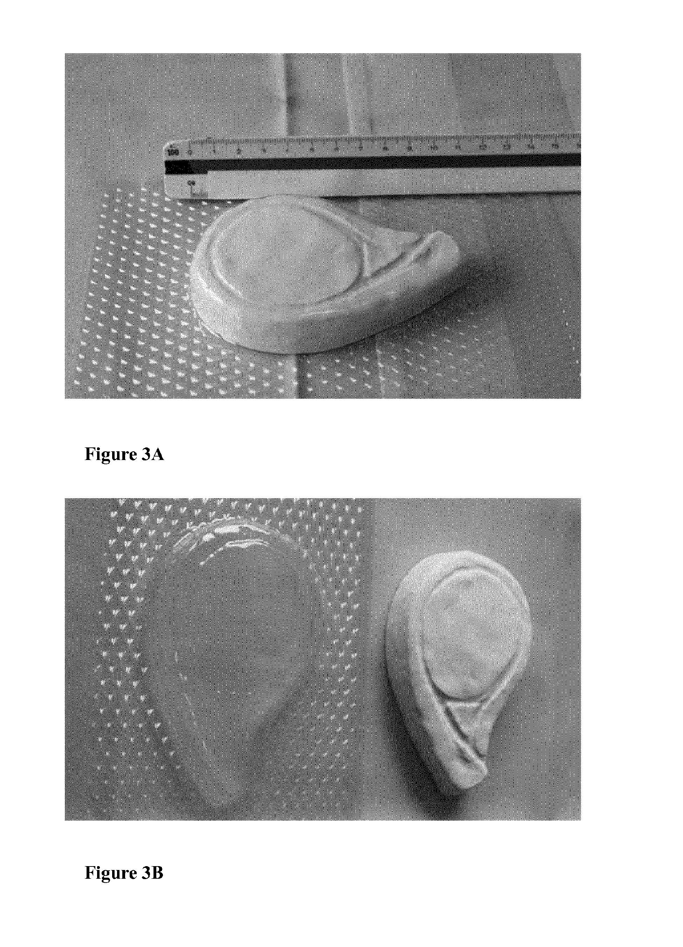

La Figure 3A est une photographie d'une préparation alimentaire à base de viande de porc à texture modifiée obtenue par le procédé de l'invention et conditionnée dans son moule de côte de porc qui lui donne sa forme. La règle est présente à titre d'indication pour la grandeur de la préparation alimentaire à texture modifiée moulée La Figure 3B est une photographie de la préparation alimentaire de la Figure 3A à droite du moule thermoformé en forme de côte de porc. Le côté bombé ou en relief du moule correspondant au creux contenant la préparation alimentaire lors du moulage est présenté vers le haut.

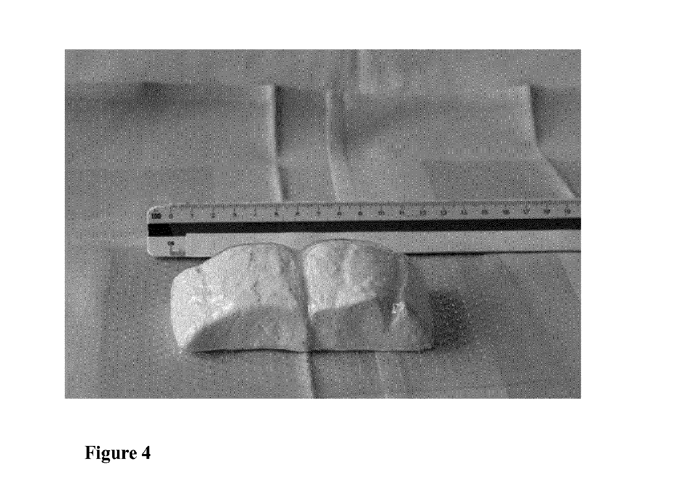

La figure 4 est une photographie d'une préparation alimentaire à base de poisson à texture modifiée obtenue par le procédé de l'invention et conditionnée dans son moule lui donnant la forme d'un pavé de poisson. La règle est présente à titre d'indication pour la grandeur de la préparation alimentaire à texture modifiée moulée.

### Description détaillée de l'invention

La présente invention relate plus précisément un procédé de fabrication d'une préparation alimentaire à texture modifiée comprenant les étapes suivantes : réduction d'un aliment solide en aliment mou, addition à l'aliment mou d'un additif X1 qui est un additif gélifiant thermoréversible comme l'agar, addition à l'aliment mou d'un additif X2 qui est un additif protéique comprenant de l'albumine tel que le blanc d'oeuf, et moulage de l'aliment mou dans un moule à une température entre 38°C et 59°C.

Plus précisément, la présente invention concerne un procédé de fabrication d'une préparation alimentaire à texture modifiée comprenant les étapes suivantes : réduction d'un aliment solide en aliment mou, addition d'un additif X1 étant un additif gélifiant thermoréversible à l'aliment mou à une température comprise entre 38°C et 100°C, addition d'un additif X2 étant un additif protéique comprenant de l'albumine à l'aliment mou à une température comprise entre 38°C et 62°C, et moulage de l'aliment mou dans un moule à une température comprise entre 38°C et 59°C.

Il est défini par « additif » ou « additif alimentaire » toute substance habituellement non consommée comme aliment en soi et habituellement non utilisée comme ingrédient caractéristique dans l'alimentation, possédant ou non une valeur nutritive, et dont l'adjonction intentionnelle à l'aliment, dans un but technologique au stade de la transformation et de la préparation de l'aliment pour la fabrication de la préparation alimentaire à texture modifiée a pour effet, que cette substance ou ses dérivés deviennent, directement ou indirectement, un composant de la préparation alimentaire à texture modifiée.

Une préparation alimentaire à texture modifiée est définie comme une préparation alimentaire comprenant un aliment à texture modifiée, c'est-à-dire un aliment dont la texture est différente de celle de l'aliment originel. Ce changement de texture correspond à la réduction d'un aliment solide en un aliment mou, c'est-à-dire en un aliment haché, mixé, mouliné ou en purée. La consistance de l'aliment s'en trouve aussi changée et ne correspond pas à la consistance de l'aliment d'origine. La consistance peut être encore modifiée par l'ajout d'additif gélifiant, stabilisant, épaississant et/ou coagulant.

La préparation alimentaire à texture modifiée obtenue par le procédé de l'invention comprend un aliment à texture modifiée. Ladite préparation ne requiert pas de mastication pour son ingurgitation, c'est-à-dire qu'elle ne nécessite pas qu'une bouchée de la préparation soit réduite en bol alimentaire par un mouvement de mastication et de broyage à l'aide des dents pour être déglutie, ni qu'elle soit préalablement réduite en purée avant sa mise en bouche. Il suffit que la bouchée de ladite préparation à texture modifiée soit mélangée à la salive par écrasement de la bouchée contre le palais à l'aide de la langue et/ou écrasement la bouchée par les muscles des mâchoires avec l'aide de la langue mais sans les dents. La préparation alimentaire à texture modifiée, une bouchée de celle-ci ou un aliment solide préparé selon le procédé de l'invention n'est ni gobé, ni avalé, ni ingurgité sans être réduit préalablement en un bol alimentaire mélangé à la salive.

L'étape de réduction de l'aliment solide, en un aliment mou peut être réalisée par mixage, hachage ou écrasement de l'aliment cuit ou cru à l'aide de presse, mixer, de couteaux, hachoir ou tout autre dispositif permettant la réduction d'un aliment entier ou en morceau en une purée ou un aliment mixé fluide. Cette réduction peut être réalisée à chaud ou à froid, sous l'application d'une pression, ou sous atmosphère contrôlée Si l'aliment mou provient d'un aliment solide cru, ledit aliment mou subit une cuisson avant ou pendant l'ajout de l'additif X1. On entend par « aliment solide », un aliment présentant une consistance ferme comprenant une texture fileuse, membraneuse, fibreuse, granuleuse, ou pâteuse. Par opposition, un aliment mou est défini par un aliment solide qui est réduit en une purée dont la taille des morceaux, si présents, ne provoque pas de suffocation lors de son ingurgitation.

Dans l'un des modes de réalisation du procédé de l'invention, l'additif X1 ajouté est un additif alimentaire gélifiant thermoréversible. Après avoir été chauffé et rendu liquide à une température supérieure à la température de fusion, cet additif gélifiant retrouve ses caractéristiques de gel ou de solide lors de son refroidissement, même si cet additif gélifiant a déjà constitué un gel par refroidissement à une température inférieure ou égale à son point de gélification. Ainsi à une température supérieure à la température de solidification de l'additif gélifiant, préférablement à une température supérieure ou égale au point de fusion de cet additif, l'aliment mou contenant cet additif se ramollit mais retrouve une consistance solide et de gel en refroidissant, i.e. lorsque la température de l'aliment est inférieure ou égale à la température de gélification de l'additif. L'additif gélifiant thermoréversible X1 est de l'agar ou agar-agar (No. CAS : 9002-18-0) ou E406 selon la Directive Européenne Directive 89/107/CEE du 21 décembre 1988, ou un substitut alimentaire de l'agar-agar. Préférablement, l'additif X1 est de l'agar. La température à laquelle l'additif X1 est ajouté à l'aliment est comprise entre 38° C et 100°C. Cette température est préférablement supérieure ou égale à la température du point de fusion de l'additif X1 lorsque ledit additif X1 n'a pas déjà atteint son point de fusion et donc n'a pas encore été liquéfié. Cette température est supérieure ou égale à 85°C lorsque l'additif X1 est de l'agar-agar. Lorsque l'additif X1 a été liquéfié ou que ledit additif a déjà été chauffé à son point de fusion, l'additif X1 peut être ajouté à une température supérieure ou égale au point de gélification à l'aliment mou. Cette température peut être aussi comprise entre 65°C et 85°C, entre 70°C et 85°C, entre 38°C et 85°C, entre 70°C et 100°C, entre 85°C et 100°C, entre 38°C et 55°C et entre 38°C et 62°C.

L'additif X1 peut être directement ajouté à l'aliment mou. Il peut être aussi ajouté à l'aliment solide avant, lors ou après la cuisson de l'aliment à une température supérieure ou égale au point de fusion de l'additif X1. L'additif X1 peut aussi être ajouté sous forme liquide après avoir été liquéfié en le chauffant à une température au-dessus de son point de fusion dans un liquide, préférablement dans le liquide de cuisson de l'aliment solide dont la texture doit être modifiée. Si la température de l'aliment mou ou solide est inférieure ou égale à la température de fusion de l'additif X1, ledit additif X1 étant de l'agar est, de préférence, chauffé à une température comprise entre 95°C et 100°C dans au moins un volume de liquide provenant de l'aliment égale à 5 fois le volume de l'additif X1 jusqu'à liquéfaction dudit additif.

Dans le procédé de l'invention, l'additif X1 est ajouté dans une proportion de 0,3% à 3.0 % (poids pourcent) de la masse totale de l'aliment mou. Cette proportion peut être réduite et être comprise entre 0.3% à 1,6%.

Dans un autre mode de réalisation du procédé de l'invention, l'additif X2 ajouté est un additif alimentaire stabilisant et émulsifiant sélectionné parmi les additifs protéiques. L'additif X2 est un additif protéique coagulant à une température d'environ 70°C. L'additif X2 est un additif protéique comprenant de l'albumine, de l'ovalbumine, ou de la lactalbumine, et encore plus préférablement de l'albumine (No. CAS : 977005-72-3). Préférablement, l'additif X2 est du blanc d'oeuf, de l'ovalbumine ou de l'albumine, plus préférablement l'additif X2 est du blanc d'oeuf ou de l'albumine. L' additif X2 est ajouté et mélangé à l'aliment mou à une température entre 38°C et 62°C, 38°C et 59°C, préférablement entre 45°C et 55°C. Il permet la stabilisation de la consistance et de la forme donnée par moulage de la préparation alimentaire à texture modifiée lorsque que celle-ci est chauffée ou cuite à une température supérieure ou égale au point de fusion de l'additif X1 afin de l'apprêter pour la servir. L'additif X2 est ajouté à la préparation sous une forme déshydratée ou liquide. L'additif X2 ne doit pas coaguler avant le moulage de l'aliment mou contenant les additifs X1 et X2 ou les additifs X1, X2 et X3.

Dans le procédé de l'invention, l'additif X2 est ajouté dans une proportion de 1.0% à 40.0 % (poids pourcent) de la masse totale de l'aliment mou. Cette proportion peut être réduite et être comprise entre 1.0% à 6.0% ou entre 1.0% et 4.0% (poids pourcent) de la masse totale de l'aliment mou. Lorsque l'additif X2 est ajouté sous forme déshydratée, l'additif X2 est ajouté de préférence dans une proportion de 1.0% à 6.0% (poids pourcent) de la masse totale de l'aliment mou. Lorsque l'additif X2 est ajouté sous forme hydratée, l'additif X2 est ajouté de préférence dans une proportion de 7.0% à 40.0% (poids pourcent) de la masse totale de l'aliment mou.

Dans un autre mode de réalisation du procédé de fabrication de l'invention, une étape supplémentaire d'addition ou d'ajout d'un additif X3 à l'aliment mou à une température comprise entre 38°C 100° est présente. Préférablement cette étape a lieu après l'ajout de l'additif X2. L'additif X3 est un épaississant de la famille des texturants alimentaires sélectionnés parmi un épaississant du type xanthane, le xanthane, la gomme de xanthane, la gomme de tara, la gomme karaya , la gomme gellane, la farine de caroube, la farine de riz, l'amidon alimentaire, l'amidon de riz, l'amidon de pomme-de-terre, l'amidon de maïs. L'additif X3 est le plus préférablement sélectionné parmi du xanthane, de la gomme de xanthane (No. CAS : 11138-66-2) et de la farine de riz. En particulier, cet additif est ajouté pour rendre plus onctueux la préparation alimentaire à texture modifiée et moins compacte.

Dans ce mode de réalisation du procédé de l'invention, l'additif X3 est ajouté dans une proportion de 0.05% à 1.5 % (poids pourcent) de la masse totale de l'aliment mou. L'additif X3 permet de limiter les effets de la synérèse lors de la décongélation ou du réchauffage de la préparation à texture modifiée de l'invention préalablement surgelée. Ainsi lors de la décongélation ou du réchauffage, la perte en liquide de ladite préparation à texture modifiée est de 3% avec la présence de cette additif et peut augmenter jusqu'à 7% en absence de cet additif.

Le procédé de fabrication d'une préparation alimentaire à texture modifiée selon l'invention est approprié pour la transformation d'aliments solides pouvant être réduits en aliments mous sont sélectionnés parmi les fruits, les légumes, les céréales, les viandes, les poissons, les fruits-de-mer et les crustacés, sous condition que le pH de l'aliment ne soit pas inférieur à 3.

Des agents alimentaires comme des aromates (herbes aromatiques, légumes), des épices, des acidifiants, des agents conservateurs usuellement contenus dans les préparations alimentaires industriels, des antioxydants, des assaisonnements, des sels, des sucres peuvent être ajoutés lors du procédé de l'invention. Il est compris par « agent alimentaire » une substance alimentaire d'origine végétale ou animale, un composé chimique alimentaire, ou un additif alimentaire dont l'ajout à la préparation alimentaire permet de renforcer le goût de ladite préparation, de corriger le goût de la dite préparation et/ou lui donner une saveur gustative ou de changer son goût naturel, et/ou d'éviter l'oxydation de ladite préparation. L'addition de ces agents alimentaire peut être une étape supplémentaire dans le procédé de l'invention, étape se déroulant avant l'étape de moulage de l'aliment mou contenant les additifs. L'addition de ces agents alimentaires peut être aussi réalisée lors de n'importe quelle étape du procédé de l'invention ou en même temps que l'ajout de l'additif X1, X2, ou X3.

Dans un mode supplémentaire de réalisation, le procédé de l'invention comprend une étape de refroidissement de l'aliment mou après l'addition de l'additif X1 afin d'éviter une coagulation ou la cuisson de l'additif X2 lors de son addition.

Selon le procédé de l'invention, l'étape de moulage de l'aliment mou est réalisée à une température comprise entre 38°C et 59°C. La température peut être réduite et être comprise entre 38°C et 55°C, ou entre 45°C et 55°C, préférablement à 50°C. L'étape de moulage peut être réalisée de manière séquentielle. L'aliment mou contenant les additifs X1, X2 ou les additifs X1, X2 et X3 est ainsi divisé en portion et répartis dans plusieurs moules.

Le procédé de l'invention peut comprendre une étape de conditionnement de la préparation alimentaire à texture modifiée incluant la fermeture du moule par un opercule et le refroidissement et/ou de surgélation du moule et de son contenu. Cette étape est réalisée sous atmosphère contrôlée ou sous vide-d' air (vacuum). Les moules utilisés sont sélectionnés parmi des moules thermoformés ou des moules en silicone.

Dans un autre mode de réalisation, le procédé de l'invention comprend une étape de surgélation du moule contenant l'aliment mou à texture modifiée suivant l'étape de moulage dudit aliment. Une étape de refroidissement du moule avant l'étape de surgélation est préférablement effectuée. Cette étape comprend le refroidissement à coeur entre 2°C et 4°C ou à 3°C de la préparation alimentaire à texture modifiée de l'invention par froid positif. On entend par «surgélation», un processus de congélation permettant de franchir aussi rapidement que nécessaire, en fonction de la nature du produit, la zone de cristallisation maximale, ce qui a pour effet que la température du produit surgelé dans tous ses points - après stabilisation thermique - est maintenue sans interruption jusqu'à sa commercialisation ou son apprêt à des valeurs égales ou inférieures à -18°C. Ainsi la préparation alimentaire obtenue par le procédé de l'invention est conditionnée sous forme de portion dont l'apparence et la forme correspondent préférablement à la forme de l'aliment solide d'origine ou à une forme en 3 dimensions. Etant stable à la chaleur, la préparation alimentaire à texture modifiée peut être à nouveau chauffée sans moule pour être apprêtée pour le service à une température supérieure au point de gélification de l'additif X1 ou dégelée sans que la forme, la consistance et la texture de ladite préparation alimentaire ou nouvellement apprêtée se modifient. L'étape de surgélation du moule contenant la préparation à texture modifiée est courte pour éviter et limiter la cristallisation de l'eau dans la préparation en cristaux de glace. Ce procédé de surgélation permet aussi de limiter les effets de synérèse lors de la décongélation

Dans un mode supplémentaire de réalisation du procédé de l'invention, les étapes d'addition des additifs X1 et X2, ou des étapes d'addition des additifs X1, X2, et X3, et l'étape de moulage se réalisent à une température comprise entre 38°C et 59°C, entre 45°C et 55°C, préférablement à 50°C.

L'invention concerne aussi une préparation alimentaire à texture modifiée obtenue par le procédé de l'invention et/ou l'un des différents modes de réalisation dudit procédé. Cette préparation ne requiert pas de mastication pour son ingestion ou ingurgitation. Cette préparation alimentaire comprend un aliment dont la texture est modifiée par le procédé de l'invention et ses différents modes de réalisation. Cet aliment est préférablement un aliment solide dont la texture est modifiée par le procédé de l'invention et ses différents modes de réalisation. La préparation alimentaire à texture modifiée comprend un aliment mou, qui peut être une purée d'aliment solide, dont la taille des particules composant l'aliment mou est inférieure à 1 mm. L'aliment mou est obtenu par réduction en purée ou en haché d'un aliment solide par l'utilisation de couteaux, d'un mixer, d'un hachoir, ou de presse. La préparation alimentaire de l'invention comprend les additifs X1 et X2. Elle peut comprendre l'additif X3 pour donner une onctuosité à la préparation alimentaire. Des agents alimentaires et aromates sont aussi compris dans ladite préparation alimentaire.

### Exemples

La présente invention est décrite plus en détail et plus spécifiquement à l'aide des exemples, lesquels n'entendent toutefois pas limiter la présente invention.

### Exemple 1 : Pavé de poisson (cabillaud) reconstitué

De la chair de poisson (cabillaud) est ajoutée à des agents alimentaires dont des aromates (poireau, herbes aromatiques, thym), des acidifiants (vin blanc et citron) et fumet de poisson lyophilisé. L'ensemble avec l'aliment solide (poisson) est cuit jusqu'à l'obtention d'une température de 75°C au coeur de la masse. L'aliment solide est réduit en aliment mou par l'utilisation d'un mixer pour obtenir une masse ou purée fine dont les particules la composant sont inférieures à 1 mm. Cette étape est effectuée sous vide-d' air partiel. La masse ou l'aliment mou de poisson est refroidi à 55°C et est maintenu à cette température jusqu'au moulage. L'additif gélifiant (X1) agar-agar est ajouté à la masse sous une forme liquéfiée et mélangé à celle-ci. L'additif protéique (X2) sous une forme lyophilisée, du blanc d'oeuf en poudre, est ensuite ajouté à l'aliment mou. L'aliment aromatisé contenant les deux additifs X1 et X2 est mélangé sous vide-d' air partiel après avoir laissé le temps à l'additif X2 de se réhydrater. Ensuite l'aliment mou aromatisé contenant les additifs X1 et X2 est moulé à 55°C dans des moules individuels ou barquettes en forme de pavé de poisson, en l'occurrence de cabillaud. Ils sont operculés sous vide-d' air partiel puis passer en cellule de surgélation rapide afin de limiter la formation de cristaux de glace dans la préparation alimentaire à texture modifiée finale.

**Tableau 1 : Composition des pavés de cabillaud à texture modifiée.**

| Ingrédients (agents alimentaires, aliment solide et additifs) | | Poids [%] | Poids [g] |
|---|---|---|---|
| Aliment solide | cabillaud | 59.99 | 2490.5 |
| Agents alimentaires | vin blanc | 2.67 | 110.7 |
| | huile | 2.67 | 110.7 |
| | citron | 0.40 | 16.6 |
| | thym | 0.07 | 2.8 |
| | Fumet de poison | 0.40 | 16.6 |
| | sel | 0.53 | 22.1 |
| | poireau | 4.00 | 166.0 |
| Additif X1 | | 0.61 | 25.3 |
| Additif X2 | | 2.00 | 83.0 |
| eau | | 26.66 | 1106.9 |
| Total | | 100.00 | 4.15 |

### Exemple 2 : carotte reconstituée

Les carottes sont ajoutées à des agents alimentaires dont des aromates (beurre, épices, crème), des acidifiants (citron). L'ensemble avec l'aliment solide (carotte) est cuit. L'aliment solide est réduit en aliment mou par l'utilisation d'un mixer pour obtenir une masse ou purée fine dont les particules la composant sont inférieures à 1 mm. Cette étape est effectuée sous vide-d' air partiel. La masse ou l'aliment mou de carotte est refroidi à 55°C et est maintenu à cette température jusqu'au moulage. L'additif gélifiant (X1) agar-agar est ajouté à la masse sous une forme liquéfiée et mélangé à celle-ci. L'additif protéique (X2) sous forme lyophilisée ( blanc d'oeuf en poudre) est ensuite ajouté à l'aliment mou. L'aliment aromatisé contenant les deux additifs X1 et X2 est mélangé sous vide-d' air partiel après avoir laissé le temps à l'additif X2 de se réhydrater. Ensuite l'aliment mou obtenu est moulé à 55°C dans des moules individuels ou barquettes en forme de légume, en l'occurrence de carotte. Ils sont operculés sous vide-d' air partiel puis passer en cellule de Surgélation rapide afin de limiter la formation de cristaux de glace dans la préparation alimentaire à texture modifiée finale.

**Tableau 2 : Composition des carottes à texture modifiée.**

| Ingrédients (agents alimentaires, aliment solide et additifs) | | Poids [%] | Poids [g] |
|---|---|---|---|
| Aliment solide | carotte | 75.75 | 2440 |
| Agents alimentaires | Crème | 4.15 | 135 |
| | citron | 0.33 | 10 |
| | macis | 0.06 | 2 |
| | beurre | 3.76 | 120 |
| | sel | 0.83 | 27 |
| | poivre | 0.08 | 2.5 |
| Additif X1 | | 0.55 | 18 |
| Additif X2 | | 1.69 | 55 |
| eau | | 13.8 | 450 |
| Total | | 100.00 | 3259.5 |

### Exemple 3 : côte de porc

De la chair de porc et le lard fumé sont ajoutés à des agents alimentaires dont des aromates (oignons, épices, arôme), des acidifiants (citron). L'ensemble avec l'aliment solide (porc) est cuit jusqu'à l'obtention d'une température de 75°C au coeur de la masse. L'aliment solide est réduit en aliment mou par l'utilisation d'un mixer pour obtenir une masse ou purée fine dont les particules la composant sont inférieures à 1 mm. Cette étape est effectuée sous vide-d' air partiel. La masse ou l'aliment mou de porc est refroidi à 55°C et est maintenu à cette température jusqu'au moulage. L'additif gélifiant (X1) agar-agar est ajouté à la masse sous une forme liquéfiée et dilué avec l'eau et mélangé à celle-ci. L'additif protéique (X2) sous une forme lyophilisée, du blanc d'oeuf en poudre, est ensuite ajouté à l'aliment mou. L'aliment aromatisé contenant les deux additifs X1 et X2 est mélangé sous vide-d' air partiel après avoir laissé le temps à l'additif X2 de se réhydrater. Ensuite l'aliment mou aromatisé contenant les additifs X1 et X2 est moulé à 55°C dans des moules individuelles ou barquettes en forme de côte de porc. Ils sont operculés sous vide-d' air partiel puis passer en cellule de Surgélation rapide afin de limiter la formation de cristaux de glace dans la préparation alimentaire à texture modifiée finale.

**Tableau 3 : Composition de la côte de porc à texture modifiée.**

| Ingrédients (agents alimentaires, aliment solide et additifs) | | Poids [%] | Poids [g] |
|---|---|---|---|
| Aliment solide | Chair de porc | 62.97 | 2520 |
| Agents alimentaires | Lard fumé | 5.25 | 210 |
| | Oignons | 3.5 | 140 |
| | Citron | 0.12 | 5 |
| | Ail | 0.12 | 5 |
| | sel | 0.55 | 22 |
| | poivre | 0.15 | 6 |
| | muscade | 0.12 | 5 |
| | porto | 1.75 | 70 |
| Additif X1 | | 0.52 | 21 |
| Additif X2 | | 1.25 | 50 |
| eau | | 22.49 | 900 |
| Total | | 100.00 | 4002 |

### Exemple 4 : timbale de riz basmati

Le riz est surcuit dans l'eau, après cuisson il est rincé puis égoutté. Il est maintenu à une température de 55° jusqu'au moulage le reste d'eau de la recette est rajoutée a ce moment a une température de 55°. A ce moment l'aliment n'est presque plus solide, il subit néanmoins un léger mixage en conservant des particules de plus ou moins 1 millimètre. Cette étape est effectuée sous vide-d' air partiel. L'additif gélifiant (X1) agar-agar est ajouté à la masse sous une forme liquéfiée dilué avec l'eau et mélangé à celle-ci. L'additif protéique (X2) sous une forme lyophilisée, du blanc d'oeuf en poudre, est ensuite ajouté à l'aliment mou. L'additif X3, du xanthane, est ensuite ajouté à l'aliment L'aliment aromatisé contenant les trois additifs X1, X2 et X3 est mélangé sous vide-d' air partiel après avoir laissé le temps à l'additif X2 de se réhydrater. Ensuite l'aliment mou aromatisé contenant les additifs X1, X2 et X3 est moulé à 55°C dans des moules individuelles ou barquettes donnant la forme d'une timbale de riz. Ils sont operculés sous vide-d' air partiel puis passer en cellule de Surgélation rapide afin de limiter la formation de cristaux de glace dans la préparation alimentaire à texture modifiée finale.

**Tableau 4 : Composition de la timbale de riz à texture modifiée.**

| Ingrédients (agents alimentaires, aliment solide et additifs) | | Poids [%] | Poids [g] |
|---|---|---|---|
| Aliment solide | Riz cuit égoutté | 64.65 | 2200 |
| Agent alimentaire | sel | 0.53 | 18 |
| Additif X1 | | 0.50 | 17 |
| Additif X2 | | 1.76 | 60 |
| Additif X3 | | 0.24 | 8 |
| eau | | 32.32 | 1100 |
| Total | | 100.00 | 3403 |

### Exemple 5 : gratin dauphinois

Cuire les pommes de terre avec le lait la crème le sel, poivre, muscade, ail. L'ensemble avec l'aliment solide (pomme de terre) est cuit jusqu'à que la masse soit fondante. L'aliment solide est réduit en aliment mou par l'utilisation d'un mixer pour obtenir une masse ou purée fine dont les particules la composant sont inférieures à 1 mm. Cette étape est effectuée sous vide-d' air partiel. La masse ou l'aliment mou de porc est refroidi à 55°C et est maintenu à cette température jusqu'au moulage. L'additif gélifiant (X1) agar-agar est ajouté à la masse sous une forme liquéfiée et dilué avec l'eau et mélangé à celle-ci. L'additif protéique (X2) sous une forme lyophilisée, du blanc d'oeuf en poudre, est ensuite ajouté à l'aliment mou. L'aliment aromatisé contenant les deux additifs X1 et X2 est mélangé sous vide-d' air partiel après avoir laissé le temps à l'additif X2 de se réhydrater. Ensuite l'aliment mou aromatisé contenant les additifs X1 et X2 est moulé à 55°C dans des moules individuelles ou barquettes en forme gratin individuel. Ils sont operculés sous vide-d' air partiel puis passer en cellule de Surgélation rapide afin de limiter la formation de cristaux de glace dans la préparation alimentaire à texture modifiée finale.

**Tableau 5 : Composition du gratin dauphinois à texture modifiée.**

| Ingrédients (agents alimentaires, aliment solide et additifs) | | Poids % | Poids [g] |
|---|---|---|---|
| Aliment solide | Pomme de terre | 49.77 | 1700 |
| Agents alimentaires | Lait | 19.91 | 680 |
| | Crème | 19.91 | 680 |
| | Ail | 0.07 | 2.6 |
| | muscade | 0.04 | 1.5 |
| | Poivre | 0.10 | 3.5 |
| | Sel | 0.82 | 28 |
| Additif X1 | | 0.56 | 19 |
| Additif X2 | | 1.49 | 50 |
| eau | | 7.32 | 250 |
| Total | | 100.00 | 3415 |

## Revendications

1. Procédé de fabrication d'une préparation alimentaire à texture modifiée comprenant les étapes suivantes :
- réduction d'un aliment solide en aliment mou ;
- addition à l'aliment mou d'un additif X1 qui est un additif gélifiant thermoréversible;
- addition à l'aliment mou d'un additif X2 qui est un additif protéique comprenant de l' albumine ;
- et moulage de l'aliment mou dans un moule à une température entre 38°C et 59°C.

2. Le procédé de fabrication selon la revendication 1, **caractérisé en ce que** l'étape d'addition de l'additif X1 a lieu à une température comprise entre 38°C et 100°C.

3. Le procédé de fabrication selon l'une quelconque des revendications 1 ou 2, **caractérisé en ce que** l'étape d'addition de l'additif X2 a lieu à une température comprise entre 38°C et 62°C.

4. Procédé selon l'une des quelconques revendications précédentes, **caractérisé en ce que** l' additif X1 est de l'agar.

5. Procédé selon l'une des quelconques revendications précédentes, **caractérisé en ce que** l' additif X2 est un additif protéique comprenant de l'albumine.

6. Procédé selon l'une des quelconques revendications précédentes, **caractérisé en ce que** l'additif X1 est ajouté dans une proportion de 0,3% à 3% de la masse totale d'aliment mou.

7. Procédé selon l'une des quelconques revendications précédentes, dans lequel l'additif X2 est dans une proportion de 1 % à 40% de la masse totale d'aliment mou.

8. Procédé selon l'une des quelconques revendications précédentes, dans lequel l'additif X2 est ajouté sous forme déshydratée ou sous forme liquide.

9. Procédé selon l'une des quelconques revendications précédentes, comprenant une étape de refroidissement de l'aliment mou après l'addition de l'additif X1.

10. Procédé selon l'une des quelconques revendications précédentes, **caractérisé en ce qu'**un additif X3 est ajouté à l'aliment mou et est un épaississant de la famille des texturants alimentaires sélectionnés parmi un épaississant du type xanthane, le xanthane, la gomme de xanthane, la gomme de tara, la gomme karaya, la gomme gellane, la farine de caroube, la farine de riz, l'amidon alimentaire, l'amidon de riz, l'amidon de pomme-de-terre, l'amidon de maïs.

11. Procédé selon l'une des quelconques revendications précédentes, **caractérisé en ce qu'**une étape de refroidissement et/ou de surgélation du moule contenant l'aliment à texture modifiée suit l'étape de moulage de l'aliment dans un moule.

12. Procédé selon la revendication 11, **caractérisé en ce que** l'étape de refroidissement et/ou de surgélation se déroule sous atmosphère contrôlée ou sous vide-d' air.

13. Procédé selon l'une des quelconques revendications précédentes, dans lequel la température des étapes d'addition des additifs X1, X2 et, si approprié, X3, et de l'étape de moulage sont effectuées, est comprise entre 38°C et 59°C.

14. Procédé selon l'une des quelconques revendications précédentes, dans lequel l'étape de moulage est réalisée de manière séquentielle et l'aliment mou obtenu par ledit procédé est divisé en portion dans plusieurs moules.

15. Préparation alimentaire à texture modifiée obtenue par le procédé de l'une des quelconques revendications 1 à 14.
